# EUROPEAN PATENT SPECIFICATION

(11) **EP 2 147 039 B1**
(45) Date of publication and mention of the grant of the patent: **10.04.2019**
(21) Application number: 08758452.0
(22) Date of filing: 09.05.2008
(51) Int. Cl.: C08G 69/48, A61L 27/18

(54) **MEDICAL DEVICES COMPRISING A CO-POLYMER OF A MODIFIED POLYAMIDE AND A POLYETHER**
KOPOLYMER EINES MODIFIZIERTEN POLYAMIDS UND POLYETHER
COPOLYMÈRE D'UN POLYAMIDE MODIFIÉ ET D'UN POLYÉTHER

(30) Priority: 10.05.2007 EP 07009440
(43) Date of publication of application: 27.01.2010
(73) Proprietor: Abbott Laboratories Vascular Enterprises Limited, Dublin 2 (IE)
(72) Inventor: LORENZ, Günter, 72072 Tübingen (DE)
(74) Representative: Peters, Hajo
(86) International application number: PCT/EP2008/003775
(87) International publication number: WO 2008/138570

(56) References cited:
- EP-A- 0 600 793
- EP-A- 1 783 156
- WO-A-2006/053777
- US-A- 5 216 087
- DATABASE WPI Week 198813 Thomson Scientific, London, GB; AN 1988-087244 XP002455882 & JP 63 037125 A (MITSUI PETROCHEM IND CO LTD) 17 February 1988 (1988-02-17)
- DATABASE WPI Week 198123 Thomson Scientific, London, GB; AN 1981-41752D XP002494875 & SU 765 437 B (MEDIC TECHN RES INS) 25 September 1980 (1980-09-25)

## Description

### Field of the invention

The present invention refers to medical devices comprising a modified Co-Polymer and the modified Co-Polymer itself having high flexibility and high stress resistance, especially tensile strength or tear resistance, in addition to the good physical characteristics of the known Block-Co-Polymers of a polyamide and a polyether, either polyether diol or polyether diamine.

### Background of the invention

Block-Co-Polymers of a polyamide and a polyether have been used in the polymer industry for a long time and - due to their enormous range of possible applications - are found in many branches of industrial products. Recently in the area of medicinal devices good use has been made of these materials especially in implants. The most popular Block-Co-Polymer of a polyamide and a polyether used in this field is PEBAX™, besides the polyamides, which include different sorts of Nylons. Even though these materials have certainly been used successfully, due to the strains put on the materials and the necessity to improve their characteristics in the light of growing experience coming from increasing numbers of treated patients, there clearly is a need for improved materials/elastomers allowing for an effective treatment of the patient preferably with an economical production process.

The EP 600 793 A (Terumo Corp. [JP]) describes polyether-polyamide block copolymer as blood compatible material.

WO2006/053777 A (Novartis AG ([CH]) discloses a water-soluble crosslinkable poly(oxyalkylene)containing prepolymer as material for contact lenses.

JP 63 037 125 A (Mitsui Petrochem Ind. Co. Ltd. [JP]) describes modified polyamide elastomers for use in car parts, sport shoes etc.

SU 765 437 (Medic. Techn. Res. Inst. [SU]) discloses modifying polyamide surgical thread or implants by treatment with acetic acid.

EP 1 783 156 A (Arkema France [FR] describes condensation copolymers of polyamide and polyether blocks and a process for producing such.

US 5, 216,087 A (Kim et al. [KR]) discloses sulfonated polythyleneoxide-substituted polymers having improved blood compatibility

### Summary of the invention

It is an object of the current invention to provide medical devices comprising modified elastomers or the modified elastomers themselves, preferably Co-Polymers having high flexibility and high stress resistance, especially tensile strength or tear resistance in addition to the good physical characteristics of the Co-Polymers.

The invention thus refers to a Co-Polymer (C) which may also be comprised within the implants or medical devices according to the invention comprising units derived from polyamide-forming monomers, units derived from polyether diols or polyether diamines and units derived from at least mono-substituted α,ω-di-carboxylic acids,
wherein the polyamide-forming monomers are represented by the following formulas (IX) or (IXa), the polyether diols are represented by the following formulas (VI) or (Via), polyether diamines are represented by the following formula (VII) or (VIIa) and the at least mono-substituted α,ω-di-carboxylic acids are represented by the following formula (I): 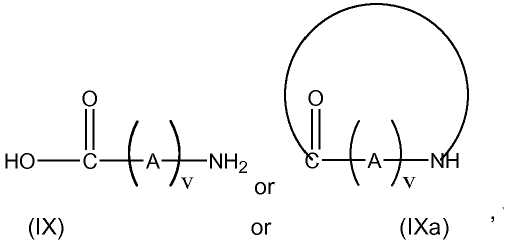 wherein
A is a divalent, branched or linear, saturated or non-saturated, optionally substituted hydrocarbon chain, with optionally one carbon atom being replaced by NH, O or S; preferably is methylene,
   and
v is a natural number between 1 and 24; preferably is a natural number between 3 and 13, more preferably is a natural number between 5 and 11; more preferably is 5, 10 or 11, even more preferably is 5 or 11, most preferably is 11;
with 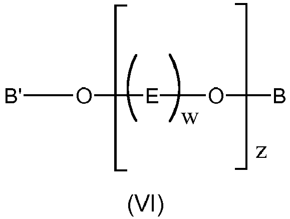 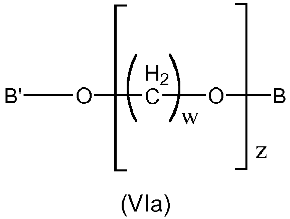 or 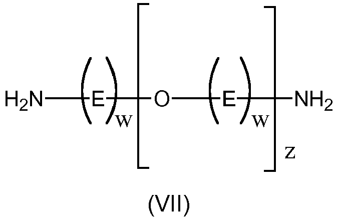 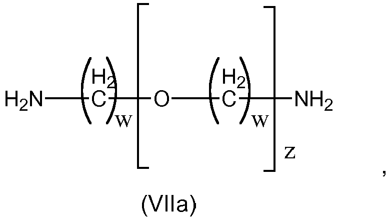 wherein
E is a divalent, branched or linear, saturated or non-saturated, optionally substituted hydrocarbon chain; preferably is methylene;
B and B' independently from one another are selected from H or C₁₋₄-Alkyl; preferably are H
w is a natural number between 1 and 24;
z is a natural number ≥1;
with

HOOC-(CH₂)ₘ-CHR¹-(CH₂)ₙ-COR² (I)

wherein
m and n are independently from each other selected from a natural number and 0 and n + m is between 1 and 9, preferably between 3 and 7; more preferably n + m is 3;
R² is selected from OH, halogen or OC₁₋₄-alkyl; preferably is OH;
R¹ is any radical except hydrogen, preferably is a sterically voluminous group, more preferably is selected from halogen; a branched or linear, saturated or non-saturated, optionally substituted C₁₋₄ alkyl-radical, even more preferably is iso-propyl or tert. butyl, most preferably is tert. butyl.

The invention furthermore resides in the use of a Co-Polymer according to the invention in the production of medical devices, balloon material, stents, stent grafts, and catheters.

### Detailed Description of the invention

The use of stents, balloons, catheters and other medical devices etc. in minimal invasive surgery, especially in the cardiovascular field, has in the last years shown a high growth. As a consequence the need for useful materials fulfilling highly specialized needs in the field of different medicinal devices has clearly risen in a technical area, which traditionally is more governed by bulk products. Especially in the field of balloons used cardiovascular surgery there was a clear desire for an elastomer, which is on one hand flexible enough to be introduced into a vascular environment without causing damage, while on the other hand being stable and rigid enough, especially in the moment of actual surgery, and inflation in the vessel, to not be extended too much inside the vessel. Besides that, the material should also have a low water absorption, because its physicochemical properties, while used or while on the shelf could be severely hampered by accepting too much water, as it could also be hampered by changes during storage due to thermo-oxidation.

The invention thus refers to an implant or medical device comprising a Co-Polymer (C) which may also be comprised within the implants or medical devices according to the invention comprising units derived from polyamide-forming monomers, units derived from polyether diols or polyether diamines and units derived from at least mono-substituted α,ω-di-carboxylic acids,
wherein the polyamide-forming monomers are represented by the following formulas (IX) or (IXa), the polyether diols are represented by the following formulas (VI) or (Via), polyether diamines are represented by the following formula (VII) or (VIIa) and the at least mono-substituted α,ω-di-carboxylic acids are represented by the following formula (I): 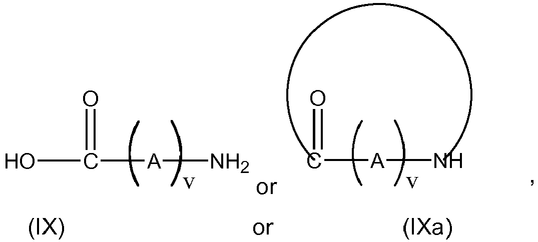 wherein
A is a divalent, branched or linear, saturated or non-saturated, optionally substituted hydrocarbon chain, with optionally one carbon atom being replaced by NH, O or S; preferably is methylene,
   and
v is a natural number between 1 and 24; preferably is a natural number between 3 and 13, more preferably is a natural number between 5 and 11; more preferably is 5, 10 or 11, even more preferably is 5 or 11, most preferably is 11;
with 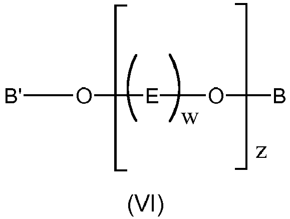 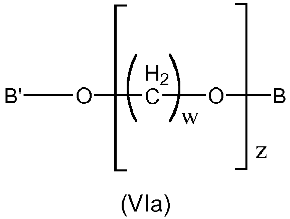 or 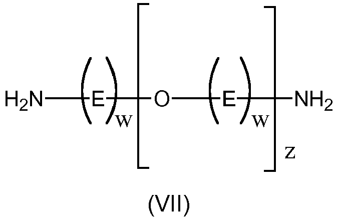 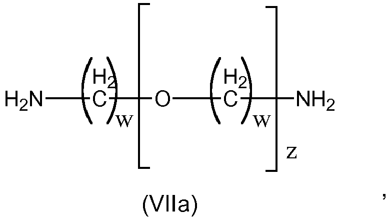 wherein
E is a divalent, branched or linear, saturated or non-saturated, optionally substituted hydrocarbon chain; preferably is methylene;
B and B' independently from one another are selected from H or C₁₋₄-Alkyl; preferably are H
w is a natural number between 1 and 24;
z is a natural number ≥1;
with

HOOC-(CH₂)ₘ-CHR¹-(CH₂)ₙ-COR² (I)

wherein
m and n are independently from each other selected from a natural number and 0 and n + m is between 1 and 9, preferably between 3 and 7; more preferably n + m is 3;
R² is selected from OH, halogen or OC₁₋₄-alkyl; preferably is OH;
R¹ is any radical except hydrogen, preferably is a sterically voluminous group, more preferably is selected from halogen; a branched or linear, saturated or non-saturated, optionally substituted C₁₋₄ alkyl-radical, even more preferably is iso-propyl or tert. butyl, most preferably is tert. butyl.

In a preferred embodiment of the Co-Polymer (C) according to the invention outlined above which may also be comprised within the implants or medical devices according to the invention
A is CH₂;
and/or
E is CH₂;
and/or
B and B' are hydrogen;
and/or
v is a natural number between 3 and 13, preferably is a natural number between 5 and 11; preferably is 5, 10 or 11, more preferably is 5 or 11, most preferably is 11;
and/or
w is a natural number between 1 and 10; preferably if z =1, w is a natural number between 1 and 10 and if z ≠ 1, w is a natural number between 2 and 10;
and/or
z is a natural number between 1 and 2000, preferably between 2 and 2000, more preferably between 1 and 1000;
and/or
R¹ is selected from halogen; a branched or linear, saturated or non-saturated, optionally substituted C₁₋₄ alkyl-radical, preferably is iso-propyl or tert. butyl, more preferably is tert. Butyl;
and/or
m and n are independently from each other selected from a natural number and 0 and n + m is between 1 and 9, preferably between 3 and 7;
and/or
R² is selected from OH, halogen or OC₁₋₄-alkyl.

In a preferred embodiment of the Co-Polymer (C) according to the invention outlined above which may also be comprised within the implants or medical devices according to the invention the Co-Polymer contains the units derived from polyamide-forming monomers in an amount of 15 to 90 weight %.

In another preferred embodiment of the Co-Polymer (C) according to the invention outlined above which may also be comprised within the implants or medical devices according to the invention the Co-Polymer contains the units derived from polyether diols or polyether diamines in an amount of 15 to 90 weight %.

Another aspect of the invention provides a process for the production of a modified polyamide forming a part of the Co-Polymer according to the invention, wherein one or more pre-polyamide/s is contacted/mixed with an at least mono-substituted α,ω-di-carboylic acid, preferably at least mono- substituted adipic acid, and then the mixture is heated to a temperature above 150° C.

In another preferred embodiment of the process for the production of a modified polyamide forming a part of the Co-Polymer according to the invention the at least mono-substituted α,ω-di-carboylic acid, preferably the at least mono- substituted adipic acid is added in an amount resulting in a molar ratio between the acid and the pre-polyamide calculated relatively based on the equivalent number of lactam Units in the pre-polyamide
- between 0.05 and 0.0005, preferably between 0.025 and 0.001; or
- between 1.0 and 0.0005, preferably between 0.75 and 0.00075, and more preferably between 0.5 and 0.001, or between 0.05 and 0.004, or between 0.1 and 0.001;
or in an amount resulting in a molar ratio between the acid and the pre-polyamide calculated relatively based on molecular weight of the polymerized amide building block (VIII) 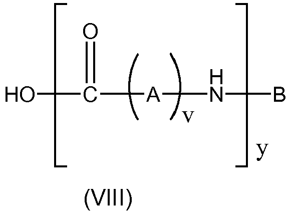
- between 0.05 and 0.0005, preferably between 0.025 and 0.001; or
- between 1.0 and 0.0005, preferably between 0.75 and 0.00075, and more preferably between 0.5 and 0.001, or between 0.05 and 0.004, or between 0.1 and 0.001.

In another preferred embodiment of the process for the production of a modified polyamide forming a part of the Co-Polymer according to the invention the reaction is executed using reactive extrusion as described in DD 276 290 A1 and Eichhorn et al. (Journal of Applied Polymer Science, Vol. 62, 2053-2060 (1996)).

Another aspect of the current invention provides the use of a Co-Polymer according to the invention in the production of implants or medical devices, preferably implanted or implantable medical devices, more preferably balloon/balloon material, stents, stent grafts, grafts graft connectors or catheters.

As described above a main aspect of the current invention provides implants or medical devices, comprising the Co-Polymer according to the invention, preferably implanted or implantable medical devices, more preferably for the production of balloon/balloon material, of stents, stent grafts, grafts graft connectors or catheters.

Preferably the implant or medical device according to the invention is selected from implanted or implantable medical devices, from balloon/balloon material, stents, stent grafts, grafts graft connectors or catheters.

Also the implant or medical device according to the invention may be selected from implanted or implantable medical devices or minimal invasive medical devices, from stents, stent grafts, grafts, graft connectors, closure devices, filters, or catheters, delivery catheters, stent delivery catheters, balloon dilatation catheters or medical balloons/balloon material.

In an additional embodiment the implant or medical device according to the invention is an implanted, implantable or minimal invasive medical device, preferably is a balloon, or stent, stent graft, graft, graft connector or catheter; more preferably is a balloon catheter or a medical balloon for a medical device, most preferably is a medical balloon for a balloon catheter.

Also in one embodiment the implant or medical device according to the invention is an implanted, implantable or minimal invasive medical device, preferably is a balloon, more preferably is a balloon catheter or a medical balloon for a medical device, most preferably is a medical balloon for a balloon catheter.

"Balloon or balloon material" in the context of this invention especially means a balloon used in coronary balloon angioplasty and the material used for these balloons, especially balloon catheters. In this, e.g. a balloon catheter is inserted into an artery and advanced to e.g. a narrowing in a coronary artery. The balloon is then inflated to enlarge the lumen. Especially it means balloon of a balloon catheter used in minimally invasive interventions, preferably in vascular interventions, more preferably used in coronary or endovascular balloon angioplasty and the material used for these balloons. Non-invasive procedures such as percutaneous transluminal angioplasty (PTA), percutaneous transluminal coronary angioplasty (PTCA), stent delivery and deployment, radiation treatment, delivery of a drug at a lesion site and other procedures are used in the treatment of intravascular disease. These therapies are well known in the art and usually utilize a balloon catheter pulled over a guide wire. After a guiding catheter is placed into the patient's main vessel, a guide wire is advanced in the guide catheter and beyond the distal end of the guide catheter. The balloon catheter is then advanced over the guidewire until it reaches the treatment site at the lesion or stenosis. The balloon is inflated to compress the lesion site and dilate the previous narrowed lesion or stenosis site. If the balloon carried a stent and/or drug, the stent and/or drug is delivered at the site when the balloon is inflated. Likewise, further therapies may also use a balloon catheter for the treatment of the lesion site.

"Stent" means an elongate implant with a hollow interior and at least two orifices and usually a circular or elliptical, but also any other, cross section, preferably with a perforated, lattice-like structure that is implanted into vessels, in particular blood vessels, to restore and maintain the vessels patent and functional.

"Graft" means an elongate implant with a hollow interior and with at least two orifices and usually circular or elliptical, but also any other, a cross section and with at least one closed polymer surface which is homogeneous or, optionally, woven, braided, knitted or spun from various strands. The surface preferably is impermeable to corpuscular constituents of blood and/or for water, so that the implant serves as a vascular prosthesis and is usually employed for damaged vessels or in place of vessels.

"Stent graft" means a connection between a stent and a graft. A stent graft preferably comprises a vascular prosthesis reinforced with a stent (both as defined above), wherein a polymer layer is homogeneous or, optionally, woven from various strands and is impermeable for corpuscular constituents of blood and/or for water. Especially the stent graft may be woven, braided, knitted or spun from various strands and may be impermeable for corpuscular constituents of blood and/or for water or may be porous to allow endothelial ingrowth but impermeable to release of emboli or may function as a mere filter for emboli. More preferably, the stent has on at least 20% of its surface a perforated (lattice-like), preferably metallic, outer layer and at least one closed polymer layer that is located inside and/or outside the stent outer layer, or, optionally, is woven, braided, knitted or spun from various strands and may be impermeable for corpuscular constituents of blood and/or for water or may be porous to allow endothelial ingrowth but impermeable to release of emboli or may function as a mere filter for emboli.. Optionally, where the closed polymer layer is disposed inside the metallic outer layer, a further perforated (lattice-like), preferably metallic, inner layer may be located inside the polymer layer.

"Graft connector" means an implant that connects at least two hollow organs, vessels or grafts, consists of the materials defined for grafts or stent grafts and/or has the structure defined for the latter. Preferably, a graft connector has at least two, three or four, orifices, arranged, for example, as an asymmetric "T" shape.

"Catheter" means a tubular instrument intended for introduction into hollow organs. More preferably, a catheter may be designed for use in guiding other catheters, or for angiography, ultrasound imaging, or - especially - balloon catheters for dilatation or stent delivery. This includes also a "Catheter pump" meaning a catheter provided on its tip with a propeller able to assist the pumping of the myocardium.

Most preferably the Co-Polymer according to the invention being comprised within the implant or medical device according to the invention is used to form a medical balloon for a medical device, especially situated on or in the medical device, especially a medical balloon situated on or in a balloon catheter, which is either a balloon catheter for stent delivery or a balloon catheter for dilation, thus carrying no stent.

Accordingly, the invention also refers to a balloon for a medical device formed from a Co-Polymer according to the invention. Preferably the balloon for a medical device is formed from a length of polymer tubing by radial expansion of the tubing under pressure, the polymer being a Co-Polymer according to the invention.

Especially for these embodiments it is preferable if the Co-Polymer from which the medical balloon is formed is showing certain attributes. Accordingly, for these embodiments it is preferred if the Co-Polymer according to the invention is showing one or both of the attributes listed below:
- the Co-Polymer has a flexural modulus of less than about 150,000 psi; and/or
- the Co-Polymer has a hardness, Shore D scale, of greater than 60.

In addition it is also preferable for these specific embodiments if the medical balloon according to the invention is showing one or both of the attributes listed below:
- a wall strength of at least 18,000 psi, and/or
- a distension over the range of 88-235 psi of at least 12%.

Also it is preferable for these specific embodiments if the medical balloon according to the invention is formed by any of the following methods with the medical balloon having proximal and distal waist portions and a central body portion:
1) radially expanding a length of polymer tubing (of the Co-Polymer according to the invention) under pressure, with said length of tubing having a proximal and distal portions which are stretched to a reduced diameter and an unstretched central portion, and said radially expanding step is accomplished by expanding said tubing in a mold such that the balloon body is formed from the unstretched central portion of the tubing and the proximal and distal waist portions of the balloon are formed from the stretched proximal and distal portions of the tubing; and/or
2) extruding a tubular segment of thermoplastic material (of the Co-Polymer according to the invention) having a predetermined wall thickness and length, the segment having a proximal end, a distal end and a center portion;
drawing the segment to a predetermined length while maintaining the temperature of the segment below the highest glass transition temperature of the Co-Polymer, wherein the proximal end forms a first waist; and expanding the segment having a first waist in a mold to produce the balloon, the balloon having a body portion, wherein the center portion of said segment becomes the balloon body portion.

There are 3 kinds of material used nowadays for medical devices, especially balloons, over which the material of the current invention - if compared case by case - shows advantages.
a) Nylon: Over Nylon, coming in different sorts, especially Nylon-12, the Co-Polymers of the invention show the advantage, that they are more flexible and/or have a lower water absorption. Especially the lack of flexibility is often considered as a drawback in medical devices using Nylon.
b) PEBA: Over PEBA (e.g. PEBAX®) the Co-Polymers of the invention show the advantage, that they are slightly more rigid and/or have a lower water absorption, again making them superior for the intended special use and allowing a much needed compromise balancing flexibility and rigidity. In addition the material of the invention seems to show higher stability, especially if compared to the effects of thermo-oxidation shown by PEBA and/or also an improved dimensional stability.
c) Blend of a) and b): The need for a compromise between the higher rigidity of Nylon and higher flexibility of PEBA has already resulted in blends being used. Still, these have no defined structures or phases, giving the material of the inventions which seems to have a lower water absorption also already an inherent advantage.

In the context of this invention "contacting/mixing" is understood as placing the at least 2 substances (e.g. pre-polyamide and acid or modified polyamide and polyether) in physical contact, e.g. in a common container, optionally mixing them to increase the amount of areas in contact between the substances.

In the context of this invention "polymerizing" is understood as a process of reacting monomers or building blocks together to form a network of polymer chains under suitable reaction conditions.

In the context of this invention "alkyl ester" of the at least mono-substituted α,ω-di-carboxylic acid is understood as an ester between the acid function on one end of the acid and a C₁₋₆-alkyl group.

In the context of this invention "acyl halide" of the at least mono-substituted α,ω-di-carboxylic acid is understood as the replacement of a hydroxyl group in the acid function by a halogen atom (-C(O)-X) - preferably a chlorine atom.

Generally "at least monsubstituted" means either "monosubstituted" or "polysubstituted".

An "aryl", "aryl radical" or group is understood as meaning ring systems with at least one aromatic ring but without heteroatoms even in only one of the rings. Examples are phenyl, naphthyl, fluoranthenyl, fluorenyl, tetralinyl or indanyl, in particular 9H-fluorenyl or anthracenyl radicals, which can be unsubstituted or monosubstituted or polysubstituted.

In the context of this invention "cycloalkyl radical" or group is understood as meaning saturated and unsaturated (but not aromatic) cyclic hydrocarbons (without a heteroatom in the ring), which can be unsubstituted or mono- or polysubstituted. Furthermore, C₃₋₄-cycloalkyl represents C₃- or C₄-cycloalkyl, C₃₋₅-cycloalkyl represents C₃-, C₄- or C₅-cycloalkyl, C₃₋₆-cycloalkyl represents C₃-, C₄-, C₅- or C₆-cycloalkyl, C₃₋₇-cycloalkyl represents C₃-, C₄-, C₅-, C₆- or C₇-cycloalkyl, C₃₋₈-cycloalkyl represents C₃-, C₄-, C₅-, C₆-, C₇- or C₈-cycloalkyl, C₄₋₅-cycloalkyl represents C₄- or C₅-cycloalkyl, C₄₋₆-cycloalkyl represents C₄-, C₅- or C₆-cycloalkyl, C₄₋₇-cycloalkyl represents C₄-, C₅-, C₆- or C₇-cycloalkyl, C₄₋₈-cycloalkyl represents C₄-, C₅-, C₆- C₇- or C₈-cycloalkyl C₅₋₆-cycloalkyl represents C₅- or C₆-cycloalkyl and C₅₋₇-cycloalkyl represents C₅-, C₆- or C₇-cycloalkyl. However, mono- or polyunsaturated, preferably monounsaturated, cycloalkyls also in particular fall under the term cycloalkyl as long as the cycloalkyl is not an aromatic system. The cycloalkyl radicals are preferably cyclopropyl, 2-methylcyclopropyl, cyclopropylmethyl, cyclobutyl, cyclopentyl, cyclopentylmethyl, cyclohexyl, cycloheptyl, cyclooctyl, and also adamantly.

A "heterocyclyl", a "heterocyclyl radical" or group or "heterocyclic ring system" is understood as meaning heterocyclic ring systems which contain one or more heteroatoms from the group consisting of nitrogen, oxygen and/or sulfur in the ring or ringsystem, and can also be mono- or polysubstituted. The ringsystem may consist either of only one saturated or unsaturated or even aromatic ring or may consist of 2, 3 or 4 saturated or unsaturated or even aromatic rings, which are condensed in that between two or more of the rings ring members are shared. Examples which may be mentioned from the group of heterocyclyls are furan, benzofuran, thiophene, benzothiophene, pyrrole, pyridine, pyrimidine, pyrazine, quinoline, isoquinoline, phthalazine, benzo-1,2,5-thiadiazole, imidazo-thiazole, benzothiazole, indole, benzotriazole, benzodioxolane, benzodioxane, carbazole and quinazoline.

In connection with aryl radical, cycloalkyl radical, or heterocyclyl radical, "substituted" is understood - unless defined otherwise - as meaning replacement of at least one hydrogen radical on the ring-system of the aryl radical, the cycloalkyl radical, or the heterocyclyl radical by OH, SH, =O, halogen (F, Cl, Br, I), CN, NO₂, COOH; NRₓR_{y}, with Rₓ and R_{y} independently being either H or a saturated or unsaturated, linear or branched, substituted or unsubstituted C₁₋₆-alkyl; by a saturated or unsaturated, linear or branched, substituted or unsubstituted C₁₋₆-alkyl; a saturated or unsaturated, linear or branched, substituted or unsubstituted -O-C₁₋₆-alkyl (alkoxy); a saturated or unsaturated, linear or branched, substituted or unsubstituted -S-C₁₋₆-alkyl; a saturated or unsaturated, linear or branched, substituted or unsubstituted -C(O)-C₁₋₆-alkyl; a saturated or unsaturated, linear or branched, substituted or unsubstituted -C(O)-O-C₁₋₆₋alkyl; a substituted or unsubstituted phenyl. "Optionally at least monsubstituted" means either "not substituted" if the option is not fulfilled, "monosubstituted" or "polysubstituted", and "at least monsubstituted" means either "monosubstituted" or "polysubstituted".

Aliphatic radicals/groups, as referred to in the present invention, are optionally mono- or polysubstituted and may be branched or unbranched, saturated or unsaturated. Aliphatic radicals, as defined in the present invention, include alkyl, alkenyl and alkinyl radicals. Unsaturated aliphatic radicals, as defined in the present invention, include alkenyl and alkinyl radicals. Preferred aliphatic radicals according to the present invention include but are not restricted to methyl, ethyl, vinyl (ethenyl), ethinyl, propyl, n-propyl, isopropyl, allyl (2-propenyl), 1-propinyl, methylethyl, butyl, n-butyl, iso-butyl, sec-butyl, tert-butyl butenyl, butinyl, 1-methylpropyl, 2-methylpropyl, 1,1-dimethylethyl, pentyl, n-pentyl, 1,1-dimethylpropyl, 1,2-dimethylpropyl, 2,2-dimethylpropyl, hexyl, 1-methylpentyl, n-heptyl, n-octyl, n-nonyl and n-decyl.

In the context of this invention, alkyl radical or group is understood as meaning saturated and unsaturated, linear or branched hydrocarbons, which can be unsubstituted or mono- or polysubstituted. Thus unsaturated alkyl is understood to encompass alkenyl and alkinyl groups, like e.g. -CH=CH-CH₃ or -C=C-CH₃, while saturated alkyl encompasses e.g. -CH₃ and -CH₂-CH₃. In these radicals, C₁₋₂-alkyl represents C₁- or C₂-alkyl, C₁₋₃-alkyl represents C₁-, C₂- or C₃-alkyl, C₁₋₄-alkyl represents C₁-, C₂-, C₃- or C₄-alkyl, C₁₋₅-alkyl represents C₁-, C₂-, C₃-, C₄-, or C₅-alkyl, C₁₋₆-alkyl represents C₁-, C₂-, C₃-, C₄-, C₅- or C₆-alkyl, C₁₋₇-alkyl represents C₁-, C₂-, C₃-, C₄-, C₅-, C₆- or C₇-alkyl, C₁₋₈-alkyl represents C₁-, C₂-, C₃-, C₄-, C₅-, C₆-, C₇- or C₈-alkyl, C₁₋₁₀-alkyl represents C₁-, C₂-, C₃-, C₄-, C₅-, C₆-, C₇-, C₈-, C₉- or C₁₀-alkyl and C₁₋₁₈-alkyl represents C₁-, C₂-, C₃-, C₄-, C₅-, C₆-, C₇-, C₈-, C₉-, C₁₀-, C₁₁-, C₁₂-, C₁₃-, C₁₄-, C₁₅-, C₁₆-, C₁₇- or C₁₈-alkyl. The alkyl radicals are preferably methyl, ethyl, vinyl (ethenyl), propyl, allyl (2-propenyl), 1-propinyl, methylethyl, butyl, 1-methylpropyl, 2-methylpropyl, 1,1-dimethylethyl, pentyl, 1,1-dimethylpropyl, 1,2-dimethylpropyl, 2,2-dimethylpropyl, hexyl, 1-methylpentyl, if substituted also CHF₂, CF₃ or CH₂OH etc.

In connection with alkylene, alkyl or aliphatic radical or group - unless defined otherwise - the term "substituted" in the context of this invention is understood as meaning replacement of at least one hydrogen radical by F, Cl, Br, I, NH₂, SH or OH; within that "monosubstituted" means the substitution of exactly one hydrogen radical, whereas "polysubstituted" means the substitution of more than one hydrogen radical with "polysubstituted" radicals being understood as meaning that the replacement takes effect both on different and on the same atoms several times with the same or different substituents, for example three times on the same C atom, as in the case of CF₃, or at different places, as in the case of e.g.-CH(OH)-CH=CH-CHCl₂. Therefore, "optionally at least monsubstituted" means either "not substituted" if the option is not fulfilled, "monosubstituted" or "polysubstituted", and "at least monsubstituted" means either "monosubstituted" or "polysubstituted". This definition of "substituted" or the selected substituents generally also applies to the "at least mono-substituted α,ω-di-carboxylic acid or its alkyl ester or its acyl halides" or an acid of formula I.

The term "alkylene" is understood as meaning a divalent alkyl group like -CH₂- or-CH₂-CH₂-, with (CH₂)₃₋₆ being understood as meaning -CH₂-CH₂-CH₂-, -CH₂-CH₂-CH₂-CH₂-, -CH₂-CH₂-CH₂-CH₂-CH₂- and -CH₂-CH₂-CH₂-CH₂-CH₂-CH₂-, (CH₂)₁₋₄ is to be understood as meaning -CH₂-, -CH₂-CH₂-, -CH₂-CH₂-CH₂- and -CH₂-CH₂-CH₂-CH₂-, (CH₂)₄₋₅ is to be understood as meaning -CH₂-CH₂-CH₂-CH₂- and -CH₂-CH₂-CH₂-CH₂-CH₂-, etc.

In a preferred embodiment according to the invention the at least mono-substituted α,ω-di-carboxylic acid is selected from at least mono-substituted oxalic acid, malonic acid, succinic acid, fumaric acid, glutaric acid, adipic acid, 1,7-heptane-dicarboxylic acid, 1,8-octane-di-carboxylic acid, 1,9-nonane-di-carboxylic acid, 1,10-decane-di-carboxylic acid, 1,11-undecane-di-carboxylic acid, 1,12-dodecane-di-carboxylic acid; preferably from at least mono-substituted adipic acid or 1,10-decane-di-carboxylic acid.

In another preferred embodiment of the modified polyamide according to the invention the at least mono-substituted α,ω-di-carboxylic acid is selected from at least mono-substituted malonic acid, succinic acid, fumaric acid, glutaric acid, adipic acid, 1,7-heptane-dicarboxylic acid, 1,8-octane-di-carboxylic acid, 1,9-nonane-di-carboxylic acid, 1,10-decane-di-carboxylic acid, 1,11-undecane-di-carboxylic acid, 1,12-dodecane-di-carboxylic acid; preferably from at least mono-substituted adipic acid or 1,10-decane-di-carboxylic acid.

In the context of this invention "forming a part of the Co-Polymer according to the invention" is defined as the compound "forming a part" being the source of a building block or building blocks derived from this compound during the production of the Co-Polymer according to the invention. Thus, these building blocks are being part of the Co-polymer after the final production step (e.g. the polymerisation).

In another preferred embodiment according to the invention the at least mono-substituted α,ω-di-carboxylic acid is a compound of general formula I

HOOC-(CH₂)ₘ-CHR¹-(CH₂)ₙ-COR² (I)

wherein
m and n are independently from each other selected from a natural number and 0 and n + m is between 1 and 9, preferably between 3 and 7;
R² is selected from OH, halogen or OC₁₋₄-alkyl;
R¹ is any radical except hydrogen, preferably is a sterically voluminous group.

In the context of this invention a "sterically voluminous group" is understood as a radical that due to its steric effect, derived from the amount of space occupied by atoms of the molecule, does give a relatively high effect of steric hindrance. Steric effects arise from the fact that each atom within a molecule occupies a certain amount of space. If atoms are brought too close together, there is an associated cost in energy, and this may affect the molecule's preferred shape and chemical reaction. Steric hindrance occurs when the size of groups within a molecule prevents chemical reactions that are observed in related smaller molecules or may also restrict molecular geometry between adjacent groups.

In another preferred embodiment of the modified polyamide according to formula I
either
m and n are independently from each other selected from 0, 1, 2 or 3 and n + m is 3;
   or
m and n are independently from each other selected from 0, 1, 2, 3, 4, 5, 6 or 7 and n + m is 7;
preferably wherein
m and n are independently from each other selected from 0, 1, 2 or 3 and n + m is 3.

In another preferred embodiment according to the invention the at least mono-substituted α,ω-di-carboxylic acid is a compound of general formula (II) 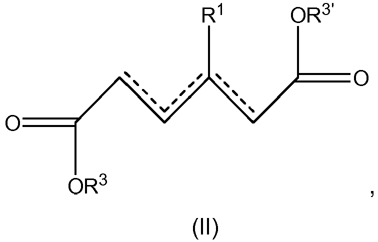 wherein
one of R^{3'} and R³ is selected from hydrogen, while the other may be either hydrogen or C₁₋₄-alkyl;
0, 1 or 2 of the bonds marked by a dotted line .......... may be a double bond, with the proviso, that if there are 2 double bonds they may not touch the same C-atom;
R¹ is any radical except hydrogen, preferably is a sterically voluminous group.

In another preferred embodiment according to the invention
R¹ is selected from halogen; a branched or linear, saturated or non-saturated, optionally substituted C₁₋₆ aliphatic radical; an optionally substituted aryl; a saturated or non-saturated, optionally substituted C₃₋₁₀-cycloalkyl; an optionally substituted heterocyclyl.

In another preferred embodiment according to the invention the at least mono-substituted α-ω-di-carboxylic acid is 3-tert. butyl adipic acid.

The examples and figures in the following section describing the use of the polyamides are merely illustrative.

### Examples:

### A) The following examples A1 to A5 are examples of the production of the modified polyamide forming part of the Co-Polymer according to the invention:

### Example A1: (1.4%; normal reaction)

50 g dried Nylon 12 (with a molecular weight of approx. 26000 g/mol) was mixed with 0.688 g (0.0034 mol) 3-tert. butyl adipic acid under argon for 2h at 220° C. The temperature was raised within 20 min to 250 °C and the mixture was stirred for another 2h. The resulting solid gave a molecular weight of 13000 g/mol. The relative molar ratio (see above) was 0.013, being calculated as 0.0034 mol (acid) : 0.253 rel. mol (Polyamid: MW (building block) 197.3).

### Example A2: (1.4%; extrusion)

The reaction of example A1 is carried out in an extruder by way of the so-called (reactive extrusion) as described in DD 276 290 A1 and Eichhorn et al. (Journal of Applied Polymer Science, Vol. 62, 2053-2060 (1996). Reaction time in each of the 2 steps is reduced to below 30 min.

### Example A3: (0.5%; normal reaction)

1651 g dried Nylon 12 (with a molecular weight of approx. 26000 g/mol) is mixed with 8.25 g (0.040 mol) 3-tert. butyl adipic acid under argon for 2h at 220° C. The temperature is raised within 20 min to 250° C and the mixture is stirred for another 2h. The relative molar ratio (see above) is 0.0048, being calculated as 0.040 mol (acid) : 8.368 rel. mol (Polyamid: MW (building block) 197.3).

### Example A4: (0.25%; normal reaction)

1753 g dried Nylon 12 (with a molecular weight of approx. 26000 g/mol) is mixed with 4.38 g (0.022 mol) 3-tert. butyl adipic acid under argon for 2h at 220° C. The temperature is raised within 20 min to 250°C and the mixture is stirred for another 2h. The relative molar ratio (see above) is 0.0025, being calculated as 0.022 mol (acid) : 8.885 rel. mol (Polyamid: MW (building block) 197.3).

### Example A5: (2.0%; normal reaction)

1694 g dried Nylon 12 (with a molecular weight of approx. 26000 g/mol) is mixed with 33.88 g (0.167 mol) 3-tert. butyl adipic acid under argon for 2h at 220° C. The temperature is raised within 20 min to 250°C and the mixture is stirred for another 2h. The relative molar ratio (see above) is 0.0195, being calculated as 0.167 mol (acid) : 8.586 rel. mol (Polyamid: MW (building block) 197.3).

### C) The following examples C1 or C2 are examples of the production of a Co-Polymer according to the invention:

### Example C1: Co-Polymer with Polyether diol

The modified polyamide according to example A1 is mixed with polytetramethyleneoxide(PTMO) diol at 200°C and the mixture is stirred for 4h.

### Example C2: Co-Polymer with Polyether diamine

The modified polyamide according to example A1 is mixed with polytetramethyleneoxide(PTMO) diamine at 200°C and the mixture is stirred for 4h.

In some examples the modified polyamide according to example A1 is mixed with polytetramethyleneoxide(PTMO) diol or diamine in a roughly or exactly equimolar amount.

As a general remark as further examples the following polyether diamines according to general formula (VII) with E being different from CH₂ are also available commercially as "Jeffamines"® and are of the following formula with w =1 and z ≈ 2.5 from HUNTSMAN: 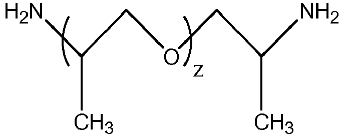 and may be reacted with the modified polyamides of examples A.

The polyether diols or diamines of this invention are commercially available or are easily synthesized by someone skilled in the art. So, as further example amino-modified polyethylene oxides can also be produced according to the state of the art, like e.g. the following literature article included here by reference: McManus, N. T. et al., Journal of Applied Polymer Science (2006), 101(6), 4230-4237.

### Test of mechanical properties:

The material according to examples C1 and C2 are compared to PEBAX®

### D) Formation of a Medical Balloon

**Example D1:** From the Material according to examples C1 and C2 lengths of a polymer tubing are formed by extrusion. The proximal and distal portions of the lengths of tubing are stretched to a reduced diameter while retaining an unstretched central portion, The lengths of polymer tubing are then radially expanded under pressure by expanding the tubing in a mold so that the balloon body is formed from the unstretched central portion of the tubing. The proximal and distal waist portions of the balloon are formed from the stretched proximal and distal portions of the tubing.

**Example D2:** From the Material according to examples C1 and C2 tubular segments with a predetermined wall thickness and length are formed by extrusion with a proximal end, a distal end and a center portion. The segment is then drawn to a predetermined length while maintaining the temperature of the segment below the highest glass transition temperature of the Co-Polymer according to examples C1 or C2. Thereby the proximal end forms a first waist. Following that, this segment with the first waist is expanded in a mold to produce the balloon. After finishing, the balloon has a body portion, wherein the center portion of the segment forms the balloon body portion.

## Claims

1. Co-Polymer comprising units derived from polyamide-forming monomers, units derived from polyether diols or polyether diamines and units derived from at least mono-substituted α,ω-di-carboxylic acids,
wherein the polyamide-forming monomers are represented by the following formulas (IX) or (IXa), the polyether diols are represented by the following formulas (VI) or (Via), polyether diamines are represented by the following formula (VII) or (VIIa) and the at least mono-substituted α,ω-di-carboxylic acids are represented by the following formula (I): 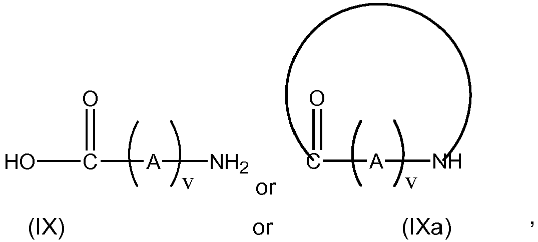 wherein
A is a divalent, branched or linear, saturated or non-saturated, optionally substituted hydrocarbon chain, with optionally one carbon atom being replaced by NH, O or S;
and
v is a natural number between 1 and 24;
with 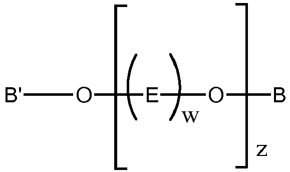 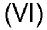 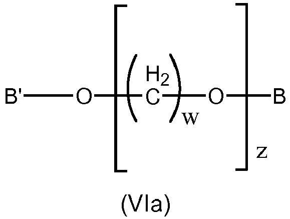 or 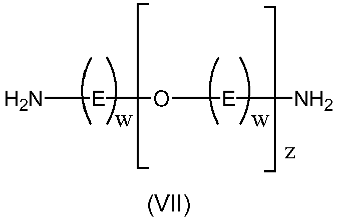 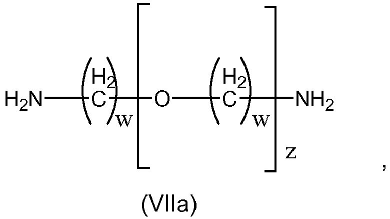 wherein
E is a divalent, branched or linear, saturated or non-saturated, optionally substituted hydrocarbon chain;
B and B' independently from one another are selected from H or C₁₋₄-Alkyl;
w is a natural number between 1 and 24;
z is a natural number ≥1;
with
HOOC-(CH₂)ₘ-CHR¹-(CH₂)ₙ-COR² (I)
wherein
m and n are independently from each other selected from a natural number and 0 and n + m is between 1 and 9;
R² is selected from OH, halogen or OC₁₋₄-alkyl;
R¹ is any radical except hydrogen.

2. Co-Polymer according to claim 1, wherein
A is CH₂.

3. Co-Polymer according to any of claims 1 or 2, wherein
E is CH₂.

4. Co-Polymer according to any of claims 1 to 3, wherein
B and B' are hydrogen.

5. Co-Polymer according to any of claims 1 to 4, wherein
v is a natural number between 3 and 13, preferably is a natural number between 5 and 11; preferably is 5, 10 or 11, more preferably is 5 or 11, most preferably is 11.

6. Co-Polymer according to any of claims 1 to 5, wherein
w is a natural number between 1 and 10; preferably if z =1, w is a natural number between 1 and 10 and if z ≠ 1, w is a natural number between 2 and 10.

7. Co-Polymer according to any of claims 1 to 6, wherein
z is a natural number between 1 and 2000, preferably between 2 and 2000, more preferably between 1 and 1000.

8. Co-Polymer according to any of claims 1 to 7, wherein
R¹ is a sterically voluminous group halogen, preferably is selected from a branched or linear, saturated or non-saturated, optionally substituted C₁₋₄ alkyl-radical, more preferably is iso-propyl or tert. butyl, most preferably is tert.-butyl.

9. Co-Polymer according to any of claims 1 to 8, wherein
m and n are independently from each other selected from a natural number and 0 and n + m is between 3 and 7.

10. Co-Polymer according to any of claims 1 to 9, wherein
R² is selected from OH, halogen or OC₁₋₄-alkyl, preferably is OH.

11. Use of a Co-Polymer according to any of claims 1 or 10 in the production of implants or medical devices,

12. Use according to claim 11 in the production of implanted or implantable medical devices.

13. Use according to claims 11 and 12 in the production of balloon/balloon material, of stents, stent grafts, grafts graft connectors or catheters.

14. Implant or medical device comprising a Co-Polymer according to any of claims 1 to 10.

15. A medical balloon for a medical device formed from a length of polymer tubing by radial expansion of the tubing under pressure, the polymer being a Co-Polymer according to any of claims 1 to 10.

## Patentansprüche

1. Copolymer umfassend aus polyamidebildenden Monomeren abgeleitete Einheiten, aus Polyetherdiolen oder Polyetherdiaminen abgeleitete Einheiten und aus zumindest monosubstituierten α,ω-di-Carbonsäuren abgeleitete Einheiten,
wobei die polyamidbildenden Monomere durch die folgenden Formeln (IX) oder (IXa) repräsentiert sind, die Polyetherdiole durch die folgenden Formeln (VI) oder (VIa) repräsentiert sind, Polyetherdiamine durch die folgende Formel (VII) oder (Vlla) repräsentiert sind und die zumindest monosubstituierten α,ω-di-Carbonsäuren durch die folgende Formel (I) repräsentiert sind: 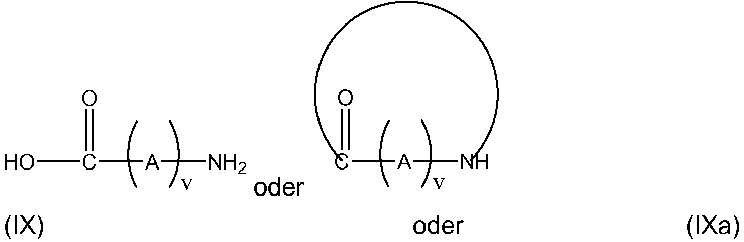 wobei
A eine zweiwertige, verzweigte oder lineare, gesättigte oder ungesättigte, gegebenenfalls substituierte Kohlenwasserstoffkette ist, wobei eventuell ein Kohlenstoffatom durch NH, O oder S ersetzt ist;
und
v eine natürliche Zahl zwischen 1 und 24 ist;
mit 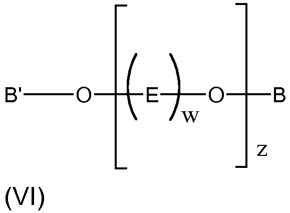 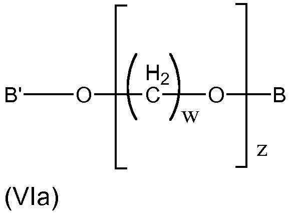 oder 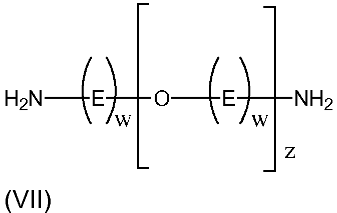 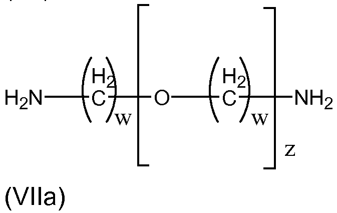 wobei
E eine zweiwertige, verzweigte oder lineare, gesättigte oder ungesättigte, gegebenenfalls substituierte Kohlenwasserstoffkette ist;
B und B' unabhängig voneinander aus H oder C₁₋₄-Alkyl ausgewählt sind;
w eine natürliche Zahl zwischen 1 und 24 ist;
z eine natürliche Zahl ≥1 ist;
mit
HOOC-(CH₂)ₘ-CHR¹-(CH₂)ₙ₋COR² (I)
wobei
m und n unabhängig voneinander aus einer natürlichen Zahl und 0 ausgewählt sind und n + m zwischen 1 und 9 ist;
R² aus OH, Halogen oder OC₁₋₄-Alkyl ausgewählt ist;
R¹ irgendein Radikal mit Ausnahme von Wasserstoff ist.

2. Copolymer nach Anspruch 1, wobei
A CH₂ ist.

3. Copolymer nach einem der Ansprüche 1 oder 2, wobei
E CH₂ ist.

4. Copolymer nach einem der Ansprüche 1 bis 3, wobei
B und B' Wasserstoff sind.

5. Copolymer nach einem der Ansprüche 1 bis 4, wobei
v eine natürliche Zahl zwischen 3 und 13, vorzugsweise eine natürliche Zahl zwischen 5 und 11; vorzugsweise 5, 10 oder 11, eher bevorzugt 5 oder 11, am meisten bevorzugt 11 ist.

6. Copolymer nach einem der Ansprüche 1 bis 5, wobei
w eine natürliche Zahl zwischen 1 und 10 ist; vorzugsweise wenn z =1, w eine natürliche Zahl zwischen 1 und 10 ist, und wenn z ≠ 1, w eine natürliche Zahl zwischen 2 und 10 ist.

7. Copolymer nach einem der Ansprüche 1 bis 6, wobei
z eine natürliche Zahl zwischen 1 und 2000, vorzugsweise zwischen 2 und 2000, eher bevorzugt zwischen 1 und 1000 ist.

8. Copolymer nach einem der Ansprüche 1 bis 7, wobei
R¹ ein sterisch voluminöses Gruppenhalogen ist, vorzugsweise aus einem verzweigten oder linearen, gesättigten oder ungesättigten, gegebenenfalls substituierten C₁₋₄-Alkyl-Radikal ausgewählt ist, eher bevorzugt Isopropyl oder tert.-butyl, am meisten bevorzugt tert.-butyl ist.

9. Copolymer nach einem der Ansprüche 1 bis 8, wobei
m und n unabhängig voneinander aus einer natürlichen Zahl und 0 ausgewählt sind und n + m zwischen 3 und 7 ist.

10. Copolymer nach einem der Ansprüche 1 bis 9, wobei
R² aus OH, Halogen oder OC₁₋₄-Alkyl ausgewählt ist, vorzugsweise OH ist.

11. Verwendung eines Copolymers nach einem der Ansprüche 1 oder 10 bei der Herstellung von Implantaten oder medizinischen Vorrichtungen.

12. Verwendung nach Anspruch 11 bei der Herstellung von implantierten oder implantierbaren medizinischen Vorrichtungen.

13. Verwendung nach Anspruch 11 und 12 bei der Herstellung eines Bal-Ions/Ballonmaterials, von Stents, Stenttransplantaten, Transplantaten, Transplantatkonnektoren oder Kathetern.

14. Implantat oder medizinische Vorrichtung umfassend ein Copolymer nach einem der Ansprüche 1 bis 10.

15. Medizinischer Ballon für eine medizinische Vorrichtung, gebildet von einem Stück eines Polymerschlauchs durch radiale Ausweitung des Schlauchs unter Druck, wobei das Polymer ein Copolymer nach einem der Ansprüche 1 bis 10 ist.

## Revendications

1. Copolymère comprenant des unités dérivées de monomères formant un polyamide, des unités dérivées de polyétherdiols ou de polyéther diamines et des unités dérivées d'acides α,ω-di-carboxyiiques au moins monosubstitués,
les monomères formant un polyamide étant représentés par les formules suivantes (IX) ou (IXa), les polyétherdiols sont représentés par les formules suivantes (VI) ou (VIa), les polyéther diamines sont représentées par les formules suivantes (VII) ou (VIIa) et les acides α,ω-di-carboxyliques au moins monosubstitués sont représentés par la formule suivante (I) : 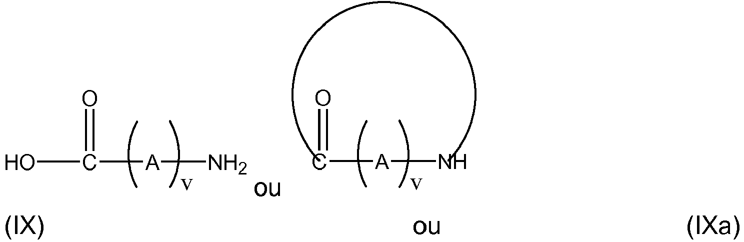 où
A est une chaîne hydrocarbonée divalente, ramifiée ou linéaire, saturée ou non saturée, éventuellement substituée, avec éventuellement un atome de carbone remplacé par NH, O ou S ;
et
v est un nombre naturel compris entre 1 et 24 ;
avec 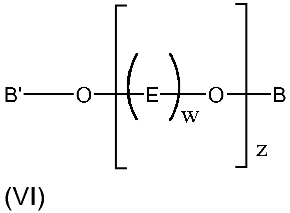 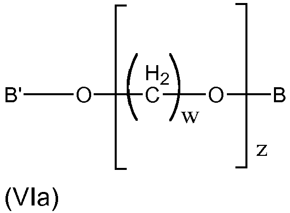 ou 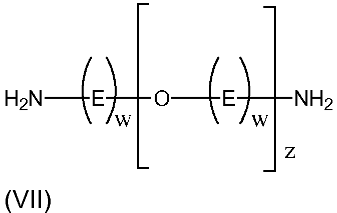 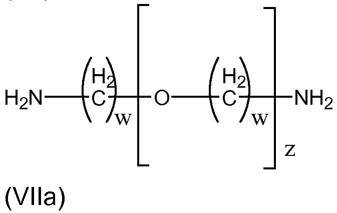 où
E est une chaîne hydrocarbonée divalente, ramifiée ou linéaire, saturée ou non saturée, éventuellement substituée ;
B et B' indépendamment l'un de l'autre, sont choisis parmi H ou un groupe alkyle en C₁₋₄ ;
w est un nombre naturel compris entre 1 et 24 ;
z est un nombre naturel ≥1 ;
avec
HOOC-(CH₂)ₘ-CHR¹-(CH₂)ₙ-COR² (I)
où
m et n sont indépendamment l'un de l'autre choisis parmi un nombre naturel et 0 et n + m est compris entre 1 et 9 ;
R² est choisi parmi OH, un atome d'halogène ou un groupe alkyle en OC₁₋₄ ;
R¹ est n'importe quel radical sauf l'hydrogène.

2. Copolymère selon la revendication 1, dans lequel
A est CH₂.

3. Copolymère selon l'une quelconque des revendications 1 ou 2, dans lequel
E est CH₂.

4. Copolymère selon l'une quelconque des revendications 1 à 3, dans lequel
B et B' sont hydrogène.

5. Copolymère selon l'une quelconque des revendications 1 à 4, dans lequel
v est un nombre naturel compris entre 3 et 13, de préférence est un nombre naturel compris entre 5 et 11 ; de préférence est 5, 10 ou 11, plus préférablement 5 ou 11, le plus préférablement 11.

6. Copolymère selon l'une quelconque des revendications 1 à 5, dans lequel
w est un nombre naturel compris entre 1 et 10 ; de préférence si z =1, w est un nombre naturel compris entre 1 et 10 et si z ≠ 1, w est un nombre naturel compris entre 2 et 10.

7. Copolymère selon l'une quelconque des revendications 1 à 6, dans lequel
z est un nombre naturel compris entre 1 et 2000, de préférence entre 2 et 2000, plus préférentiellement entre 1 et 1000.

8. Copolymère selon l'une quelconque des revendications 1 à 7, dans lequel
R¹ est un groupe d'halogène stériquement volumineux, de préférence choisi parmi un radical alkyle en C₁₋₄ ramifié ou linéaire, saturé ou non saturé, éventuellement substitué, plus préférablement iso-propyle ou tert-butyle, le plus préférablement tert-butyle.

9. Copolymère selon l'une quelconque des revendications 1 à 8, dans lequel
m et n sont indépendamment l'un de l'autre choisis parmi un nombre naturel et 0 et n + m est compris entre 3 et 7.

10. Copolymère selon l'une quelconque des revendications 1 à 9, dans lequel
R² est choisi parmi OH, un atome d'halogène ou un groupe alkyle en OC₁₋₄, de préférence est OH.

11. Utilisation d'un copolymère selon l'une quelconque des revendications 1 ou 10 dans la fabrication d'implants ou de dispositifs médicaux.

12. Utilisation selon la revendication 11 dans la fabrication de dispositifs médicaux implants ou implantables.

13. Utilisation selon les revendications 11 et 12 dans la fabrication de ballons / matériaux de ballons, d'extenseurs, d'endoprothèses, de connecteurs d'endoprothèses greffés ou de cathéters.

14. Implant ou dispositif médical, comprenant un co-polymère selon l'une quelconque des revendications 1 à 10.

15. Ballon médical pour un dispositif médical formé à partir d'une longueur de tubage de polymère par l'expansion radiale du tubage sous pression, le polymère étant un copolymère selon l'une quelconque des revendications 1 à 10.
